# EUROPÄISCHE PATENTSCHRIFT

(11) **EP 1 850 784 B1**
(45) Veröffentlichungstag und Bekanntmachung des Hinweises auf die Patenterteilung: **06.08.2014**
(21) Anmeldenummer: 06705929.5
(22) Anmeldetag: 07.02.2006
(51) Int. Cl.: A61C 8/00

(54) **ZAHNIMPLANTAT**
TOOTH IMPLANT
IMPLANT DENTAIRE

(30) Priorität: 07.02.2005 DE 102005005746
(43) Veröffentlichungstag der Anmeldung: 07.11.2007
(73) Patentinhaber: Neumeyer, Stefan Dr., D-93458 Eschlkam (DE)
(72) Erfinder: Neumeyer, Stefan Dr., D-93458 Eschlkam (DE)
(74) Vertreter: Graf Glück Kritzenberger
(86) Internationale Anmeldenummer: PCT/DE2006/000203
(87) Internationale Veröffentlichungsnummer: WO 2006/081815

(56) Entgegenhaltungen:
- EP-A- 1 110 514
- WO-A-01/49199
- DE-A1- 10 315 399
- US-A- 4 468 200
- US-A- 5 989 026
- US-B1- 6 726 480

## Beschreibung

Die Erfindung bezieht sich auf ein Zahnimplantat gemäß Oberbegriff des Patentanspruchs 1.

Zahnimplantate sind in unterschiedlichsten Ausführungen bekannt. Zahnimplantate mit den Merkmalen des Oberbegriffs des Patentanspruchs 1 sind bekannt (DE 103 15 399 A1, US 5 989 026 A).Bei einer Ausführung der bekannten Implantate weist der Zapfen zwei Abschnitte auf, die in Zapfenlängsrichtung aneinander anschließen und deren Umfangsfläche mit der Zapfenlängsrichtung einen unterschiedlichen Winkel derart einschließt, dass der an den Pfosten des Implantats anschließende Abschnitt eine kreiszylinderförmige Umfangsfläche aufweist und der sich an diesen Abschnitt zum freien Ende des Zapfens hin anschließende Abschnitt kegelstumpfförmig ausgebildet ist. Der unmittelbar an den Pfosten des Implantats anschließende Abschnitt ist an seiner Umfangsfläche mit einer Vielzahl von nutenförmigen Vertiefungen und dazwischenliegenden Vorsprüngen ausgebildet.

Aufgabe der Erfindung ist es, ein Zahnimplantat aufzuzeigen, welches hinsichtlich Anwendung und auch Einbindung im Knochengewebe verbessert ist. Zur Lösung dieser Aufgabe ist ein Zahnimplantat entsprechend dem Patentanspruch 1 ausgebildet.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung und in Seitenansicht ein Zahnimplantat gemäß der Erfindung;
- Fig. 2: in Teildarstellung einen Schnitt durch den Zapfen des Implantats der Figur 1;
- Fig. 3: das Zahnimplantat der Fig. 1 in Draufsicht von oben;
- Fig. 4: in vergrößerter Darstellung den Übergang bzw. Spalt zwischen dem Implantat und einer auf dieses Implantat befestigten Kappe, zusammen mit dem anschließenden Gewebe zur Erläuterung der sogenannten "biologischen Breite";

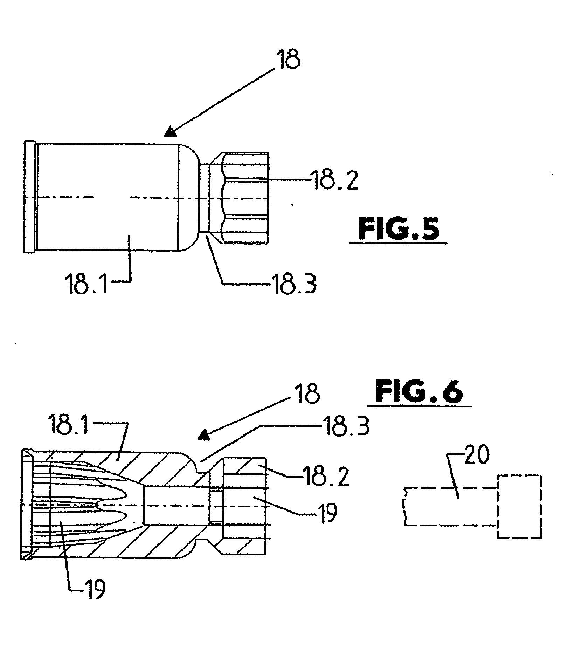

- Fig. 5 und 6: in Seitenansicht bzw. im Längsschnitt einen Einschraubadapter zur Verwendung bei dem Implantat der Figur 1;
- Fig. 7: einen Schnitt durch das Zahnimplantat gemäß der Schnittlinie I - I der Figur 1 bei einer weiteren möglichen Ausführungsform;
- Fig. 8: in einer Darstellung ähnlich Figur 1 eine weitere mögliche Ausführungsform des erfindungsgemäßen Zahnimplantats;
- Fig. 9 und 10: in vergrößerter Teildarstellung einen Schnitt durch den oberen Abschnitt des Pfostens des Zahnimplantats im Bereich der "switched platform";
- Fig. 11 - 13: Schnitte entsprechend der Linie I - I sowie durch verschiedene, jeweils an die natürliche Zahnform angepasste Kappen;
- Fig. 14 und 15: jeweils in perspektivischer Darstellung eine als Prämolar bzw. Molar ausgebildete Kappe;
- Fig. 16: in einer Darstellung wie Figur 1 eine weitere Ausführungsform des erfindungsgemäßen Implantats;
- Fig. 17 und 18: jeweils eine Draufsicht auf ein Implantat entsprechend einer weiteren Ausführungsform;
- Fig. 19: einen Schnitt durch einen natürlichen Zahn und den Zapfen eines Implantats;
- Fig. 20: in Teildarstellung ein zweiteiliges Implantat;
- Fig. 21: in schematischer Darstellung einen girlandenförmigen Verlauf einer "switched platform".

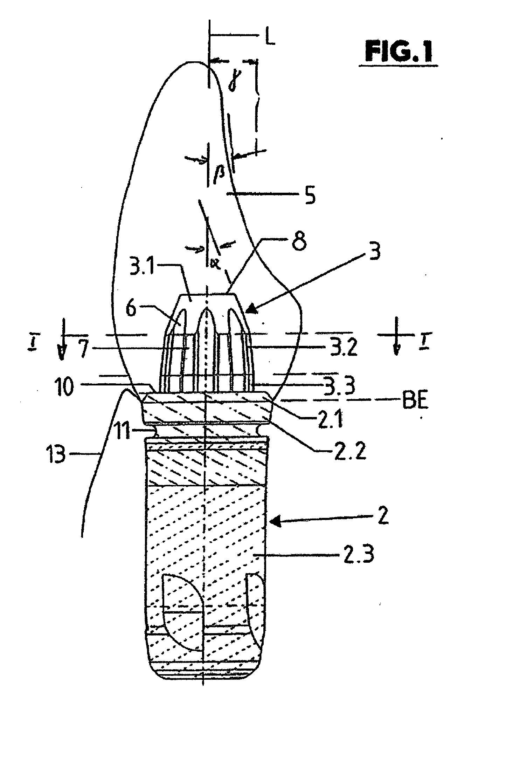

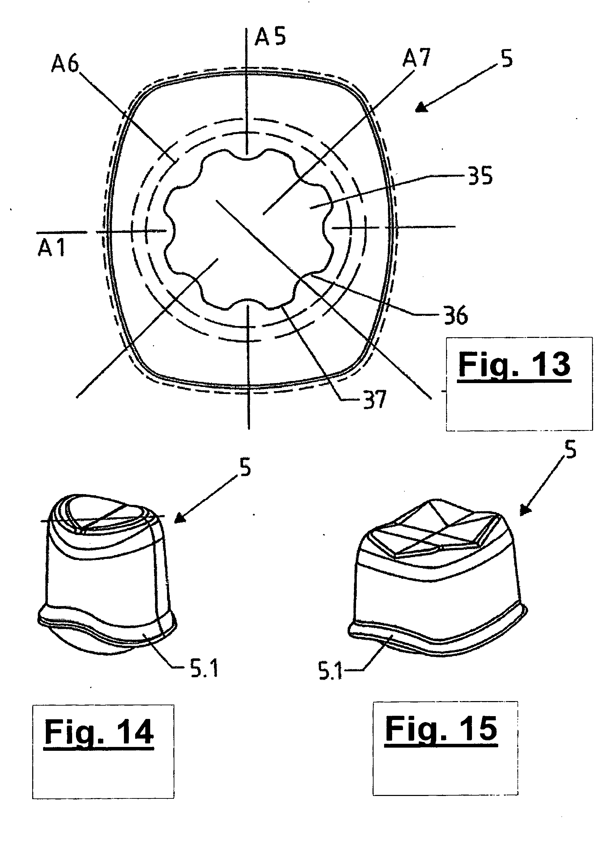

Das in den Figuren 1 - 3 allgemein mit 1 bezeichnete Zahnimplantat ist aus einem geeigneten Material, beispielsweise aus Titan einstückig mit einem im Kiefer bzw. im Knochengewebe durch Einschrauben zu verankernden Pfosten 2 und mit einem am oberen Ende dieses Pfostens vorgesehenen Zapfen 3 gefertigt. Der Zapfen 3, der nach dem Setzen des Implantats zur Fixierung einer Einheilkappe 4 (Figur 13) und nach dem Einheilen des Implantats zur Befestigung einer den restaurierten bzw. ersetzten Zahn bildenden Kappe 5 oder eines anderen Aufbauteils dient, ist bei der dargestellten Ausführungsform einem sogenannten "Torx-Zapfen" entsprechend ausgeführt, und zwar am Zapfenumfang mit insgesamt acht nutenartigen Vertiefungen 6, die mit ihrer Längserstreckung in Richtung der Implantatlängsachse L des Implantats 1 orientiert sind. Die Vertiefungen 6 besitzen weiterhin einen konkaven abgerundeten Boden und gehen auch jeweils abgerundet in die zwischen den Vertiefungen 6 gebildeten Stege 7 über.

Der Zapfen 3 bildet an seiner den Pfosten 2 entfernt liegenden oberen freien Ende eine Stirnfläche 8, die bei der dargestellten Ausführungsform flach ausgebildet ist, und in einer Ebene senkrecht zur Implantatlängsachse L liegt und an der bei der dargestellten Ausführungsfrom eine achsgleich mit der Implantatlängsachse L angeordnete Gewindebohrung 9 vorgesehen sind. Grundsätzlich besteht aber auch die Möglichkeit, die Stirnfläche 8 gewölbt auszubilden, und zwar beispielsweise konkav oder konvex.

Ausgehend von der Stirnfläche 8 weist der Zapfen 3 hinsichtlich seiner Formgebung drei Abschnitte auf, und zwar einen ersten, sich kegelstumpfförmig erweiternden Zapfenabschnitt 3.1, dessen Mantelfläche einen ersten Winkel α mit der Implantatlängsachse L einschließt, einen zweiten Zapfenabschnitt 3.2, dessen Mantelfläche einen zweiten Winkel β mit der Implantatlängsachse L einschließt, wobei der Winkel β kleiner ist als der Winkel α sowie einen dritten Zapfenabschnitt 3.3 dessen Mantel- oder Umfangsfläche einen dritten Winkel γ mit der Implantatlängsachse I einschließt, der kleiner ist als der Winkel β. Die vorgenannten Winkel betragen beispielsweise:

| Abschnitt | | |
|---|---|---|
| Zapfenabschnitt 3.1 | Zapfenabschnitt 3.2 | Zapfenabschnitt 3.3 |
| α | β | γ |
| 12 - 85° | 4 - 12° | 0 - 3° |

Bei einer bevorzugten Ausführungsform beträgt der Winkel α 21°, der Winkel β 6° und der Winkel γ etwa 0°. Am Abschnitt 3.3 ist also bei dieser Ausführungsform die Außenfläche des Zapfens 3 bzw. die von der Außenfläche der Vorsprünge 7 gebildete Umfangskontur im Wesentlichen kreiszylinderförmig, wobei allerdings die axiale Länge des Abschnittes 3.3 sehr viel kleiner ist als die axiale Länge des Abschnittes 3.2, aber auch kleiner als die axiale Länge des Abschnittes 3.1.

Die Abschnitte 3.1 und 3.2 bzw. deren von den Außenflächen der Vorsprünge 7 gebildete Außenkontur ist somit kegelstumpfförmig oder im Wesentlichen kegelstumpfförmig. Die Außenfläche des Zapfens 3 im Bereich des Zapfenabschnittes 3.3 bzw. die von der Außenfläche der Vorsprünge 7 gebildete Außenkontur dieses Zapfens ist im Bereich des Abschnittes 3.3 leicht kegelstumpfförmig oder kreiszylinderförmig. Die zwischen den Vorsprüngen 7 gebildeten Einkerbungen folgen beispielsweise der dreistufigen Formgebung der Außenkontur des Zapfens 3. Durch die dreistufige Formgebung des Zapfens 3 wird eine optimale Übertragung der Kräfte von dem auf dem Zapfen 3 ausschließlich durch Verkleben befestigten Aufbauteil bzw. dem restaurierten und ersetzten Zahn oder der Krone (Kappe 5) erreicht, und zwar derart, dass bei Belastung insbesondere im Ausbauteil am Übergang zu dem Zapfen 3 keine das Aufbauteil zerstörende oder schädigende Belastungsspitzen auftreten.

Wie in der Figur 1 weiterhin dargestellt, reichen die Vorsprünge 7 und die zwischen diesen gebildeten Ausnehmungen bzw. Einkerbungen bis an die den Zapfen 3 umschließenden Ringfläche 10.

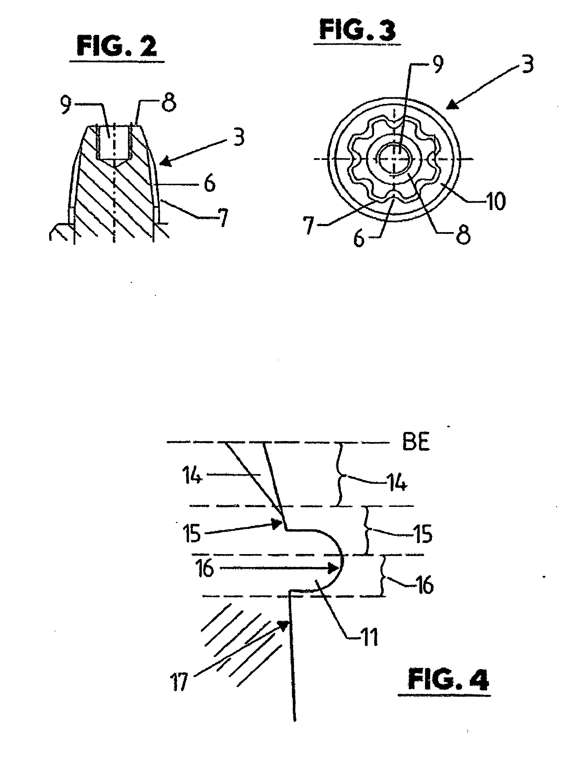

Die Figur 3 ist eine Draufsicht auf den Zapfen 3. Dargestellt ist, dass die Vorsprünge 7 im Bereich des Übergangs zwischen den Abschnitten 3.1 und 3.2 in der Draufsicht 3 einen relativ ausgeprägten trapezartigen Querschnitt mit nur leicht abgerundeten Ecken aufweisen. Grundsätzlich besteht auch die Möglichkeit, die Vorsprünge 7 bzw. die zwischen diesen Vorsprüngen gebildeten nutenartigen Vertiefungen 6 so auszuformen, dass sich für die Vorsprünge 7 und die dazwischen liegenden Vertiefungen 6 in der Darstellung der Figur 3 ein wellenförmiger, sinusartiger Verlauf ergibt bzw. die Vorsprünge 7 derart abgerundet sind, dass bei der Darstellung der Figur 3 die Außenkontur der Vorsprünge der Kontur der Vertiefungen 6 entspricht.

Insbesondere die Winkel α und β sind so gewählt, dass sich für die auf den Zapfen 3 aufgesetzte Kappe bzw. das entsprechende Aufbauteil in der endgültigen Form eine möglichst große Materialdicke in dem den Zapfen umgebenden Bereich ergibt, d.h. die Winkel α und β sind so gewählt, dass die Umfangs- oder Mantelfläche des Abschnittes 3.1 und 3.2 parallel zu der diesen Abschnitten benachbarten Außenfläche der Kappe 5 bzw. des Aufbauteils verlaufen oder aber mit dieser Außenfläche einen Winkel einschließt, der sich zu der den Pfosten 2 abgewandten Seite der Kappe 5 öffnet, so dass eine ausreichende Materialdicke und damit eine ausreichende Festigkeit für die Kappe in ihrem den Zapfen 3 umgebenden Bereich sichergestellt ist, und zwar für jede Ausprägung der Kappe 5 bzw. des Aufbauteils, d.h. sowohl in der Form als Front- oder Schneidezahn, als auch als Prämolar oder Molar.

An dem Zapfenabschnitt 3.1 schließt sich in Richtung des Pfostens 2 ein Zapfenabschnitt 3.2 an, an dem die Außenfläche des Zapfens 3 oder die von der Außenfläche der Vorsprünge 7 gebildete Umfangskontur des Zapfens 3 ebenfalls kegelstumpfförmig, allerdings mit einem gegenüber dem Abschnitt 3.1 sehr viel kleineren Kegelwinkel, beispielsweise mit einem Kegelwinkel von 6° gegenüber der Implantatlängsachse L ausgebildet ist.

An dem Abschnitt 3.2 schließt sich schließlich ein Abschnitt 3.3 an, an dem die Außenfläche des Zapfens 3 bzw. die von den Außenflächen der Vorsprünge 7 gebildete Umfangskontur im wesentlichen kreiszylinderförmig ist, wobei allerdings die axiale Länge des Abschnittes 3.3 sehr viel kleiner ist als die axiale Länge des Abschnittes 3.2, aber auch kleiner als die axiale Länge des Abschnittes 3.1.

Der Boden jeder Vertiefungen 6 folgt der Kontur der Außenfläche des Zapfens 3, d.h. der Zapfenabschnitt 3.2 weist auf der Längserstreckung jeder Vertiefung 6 der mit der Implantatlängsachse L einen Winkel auf, der gleich oder etwa gleich dem kleineren Kegelwinkel des Zapfenabschnittes 3.2 ist. Am Zapfenabschnitt 3.3 ist die Längserstreckung jeder Vertiefung 6 parallel zur Implantatlängsachse L orientiert.

Der Außendurchmesser des Zapfens 3 bzw. des Zapfenabschnittes 3.3 ist am Übergang zum Pfosten 2 kleiner als der Außendurchmesser des an dem Zapfen 3 anschließenden, in der Figur 1 oberen Pfostenabschnittes 2.1, so dass sich am Übergang zwischen dem Zapfen 3 und im Pfosten 2 eine den Zapfen 3 umschließende und in einer Ebene senkrecht zur Implantatlängsachse L liegende Ringfläche 10 ergibt.

Der Pfostenabschnitt 2.1 ist bei der dargestellten Ausführungsform wiederum kegelstumpfförmig ausgebildet, und zwar derart, dass sich dieser Pfostenabschnitt in Richtung zum unteren, dem Zapfen 3 entfernt liegenden Ende des Zahnimplantats 1 im Durchmesser vergrößert. An dem Zapfenabschnitt 2.1 schließt sich ein weiterer Zapfenabschnitt 2.2 an, der ebenfalls kegelstumpfförmig ausgebildet ist, und zwar derart, dass sich dieser Pfostenabschnitt 2.2, dessen axiale Länge größer ist als die axiale Länge des Abschnitts 2.1, leicht zu dem dem Zapfen 3 entfernt liegenden Ende des Pfostens 2 hin verjüngt. An dem Pfostenabschnitt 2.2 schließt sich ein Pfostenabschnitt 2.3 an, der mit einem Außengewinde versehen ist und mit dem das Zahnimplantat 1 im Knochengewebe des Kiefers durch Eindrehen bzw. Einschrauben verankert wird.

Im Bereich des Zapfenabschnittes 2.3 ist das Zahnimplantat 1 in Teilbereichen leicht konisch sich verjüngend ausgeführt, beispielsweise am oberen und unteren Ende dieses Pfostenabschnittes. Dazwischenliegend weist der Abschnitt 2.3 eine im Wesentlichen kreiszylinderförmige Umfangskontur auf.

Zwischen den beiden Abschnitten 2.2 und 2.3 ist in den Pfosten 2 eine bei dieser Ausführungsform ringnutartige, die Implantatlängsachse L konzentrisch umschließende und eine sogenannte switched-platform bildende Vertiefung 11 eingebracht, die in der nachstehend noch näher beschriebenen Weise insbesondere eine Reduzierung oder ein Rückbilden des Knochengewebes nach dem Einheilen des implantats nachhaltig auch über längere Zeit verhindert, wie dies nachstehend noch näher erläutert wird.

Nach dem Einheilen des Implantats wird auf den Zapfen 3 das Aufbauteil (z.B. die Kappe 5) befestigt, und zwar unter Verwendung eines geeigneten Klebers oder Zements. Die Kappe 5 besitzt hierfür eine an die Form und den Querschnitt des Zapfens 3 angepasste Öffnung, die weiterhin so ausgebildet ist, dass sie auch den Pfostenabschnitt 2.1 übergreift. Der Übergang zwischen den beiden Pfostenabschnitten 2.1 und 2.2 bildet somit einen Spalt bzw. eine Bezugsebene BE für die sogenannte biologische Breite, wie dies nachstehend noch erläutert wird.

Das Setzen des Implantats 1 erfolgt aus optischen bzw. kosmetischen Gründen derart, dass nach dem Befestigen der Kappe 5 auf dem eingeheilten Implantat 1 diese Bezugsebene BE bei der für die Figur 1 gewählten Darstellung unterhalb der Oberseite des anschließenden und in der Figur 1 mit 13 bezeichneten Weichgewebes liegt, dieser Übergang also durch das gegen die Kappe 5 anliegende Weichgewebe 13 also optisch abgedeckt ist und somit dieser Übergang zwischen der Kappe 5 und dem Implantat 1 sowie insbesondere auch das Implantat 1 selbst nicht sichtbar sind.

Die Figur 4 zeigt die Verhältnisse im Bereich des Übergangs zwischen Kappe 5 und Zahnimplantat 1 nochmals im Detail und in vergrößerter Darstellung. Entsprechend dem Gesetz der "biologische Breite" bildet sich im Bereich der Bezugsebene BE ein sogenannter Sulcus, der in der Figur 4 mit 14 bezeichnet ist, d.h. eine das eingeheilte Implantat 1 umschließende taschenartige Vertiefung, und zwar mit einer Tiefe von etwa 0,5 bis 0,7 mm ausgehend von der Bezugsebene BE bzw. dem Übergang Implantat1/Kappe5 an der Außenfläche. An dem Sulcus 14 anschließend bildet sich ein sogenanntes Epitel-Attachment mit dem Implantat 1 aus, welches sich ausgehend von dem Sulcus 14 über eine Strecke von etwa 1,0 bis 1,2 mm entlang des Implantats erstreckt. Im Anschluss daran bildet sich das Bindegewebe - Attachment 16 aus, und zwar derart, dass die Wegstrecke entlang des Implantats von der Bezugsebene BE bis zum Knochengewebe 17 etwa 2,5 - 3,00 mm beträgt.

Diese Längen sind biologisch vorgegeben. Da bei dem Implantat 1 aus optischen Gründen der Übergang Implantat/Aufbauteil aus optischen Gründen relativ tief im Weichgewebe 13 vorgesehen ist, verschiebt sich auch die Ausbildung des sogenannten Sulcus in das Weichgewebe bzw. in Richtung Knochengewebe 17, so dass es dann aufgrund der Gesetzmäßigkeit der "biologischen Breite" nach dem Einheilen des Implantats langfristig zu einer unerwünschten Rückbildung des Knochens im Bereich des Implantats kommt, sofern nicht entsprechende Maßnahmen hiergegen getroffen werden.

Um dies zu verhindern, sieht die Erfindung vor, dass am Übergang zwischen den Pfostenabschnitten 2.2 und 2.3 eine Vertiefung 11 vorgesehen ist. Das Implantat 1 wird dann so gesetzt, dass im Wesentlichen nur der Pfostenabschnitt 2.3 im Knochengewebe 17 aufgenommen ist, während sich am Pfostenabschnitt 2.2 und im Bereich der Vertiefung 11 der Sulcus 14, das Epitel-Attachment 15 und das Bindegwinde-Attachment 16 ausbilden. Der Erfindung liegt dabei die Erkenntnis zugrunde, dass es für die Gesetzmäßigkeit der "biologischen Breite" nicht auf die Abstände gemessen in der Achsrichtung parallel zur Implantatlängsachse L ankommt, sondern auf die Wegstrecken entlang der Außenfläche des Implantats 1. Durch die Vertiefung 11 wird diese Wegstrecke so vergrößert, dass trotz des tiefer gesetzten Übergangs zwischen Aufbauteil bzw. Kappe 5 und Implantat die von der Gesetzmäßigkeit der "biologischen Breite" vorgegebenen Wegstrecken eingehalten werden und somit eine Rückbildung des Knochengewebes 17 verhindert wird.

Die Vertiefung 11 wird im Sinne der Erfindung auch als "switched-platform" bezeichnet.

Zum Setzen bzw. Eindrehen oder Einschrauben des Implantats 1 dient ein Einschraubadapter 18, der aus einem hochfesten Material, beispielsweise Stahl, Titan oder einer anderen geeigneten Metall-Legierung hergestellt ist, und zwar bei der dargestellten Ausführungsform mit einem an der Außenfläche im Wesentlichen kreiszylinderförmigen Zapfenabschnitt 18.1, an den sich eine als Sechskant ausgebildeter Abschnitt 18.2 anschließt. Zwischen beiden Abschnitten 18.1 und 18.2 ist eine Ringnut 18.3 vorgesehen, durch die beide Abschnitte optisch voneinander getrennt sind. Der Adapter 18 besitzt weiterhin eine achsgleich mit seiner Achse ausgebildete Bohrung 19, die im Bereich des Abschnittes 18.1 an die Form des Zapfens 3 angepasst ist, so dass der Adapter 18 für das Eindrehen des Implantats 1 form- und kraftschlüssig auf den Zapfen 3 aufgesetzt werden kann. Mit einer die Bohrung 19 durchgreifenden und in die Gewindebohrung 9 eingreifende Schraube 20 ist der Adapter 8 dann beim Setzen bzw. Eindrehen des Implantats 1 an diesem bzw. an dem Zapfen 3 gesichert.

Nach dem Eindrehen des Implantats wird die Schraube 20 gelöst, so dass der Adapter 8 dann abgezogen und nach einem Sterilisieren wieder verwendet werden kann. Der Adapter 18 dient zugleich als Orientierungshilfe beim Einbringen des Implantats, d.h. die axiale Länge des Abschnittes 18.1 entspricht der Höhe eines üblichen Molaren oder Prämolaren und die gesamte axiale Länge des Adapters 18 in etwa der Höhe eines Frontzahnes. Hierdurch ist es dann möglich, die Einbringtiefe des Implantats 1 optimal zu wählen, wobei durch die Nut 18.3 zwischen den beiden Abschnitten 18.1 und 18.2 die axiale Länge des Abschnittes 18.1 deutlich erkennbar ist und durch diese Nut zugleich auch die Sichtverhältnisse beim Setzen des Implantats verbessert werden.

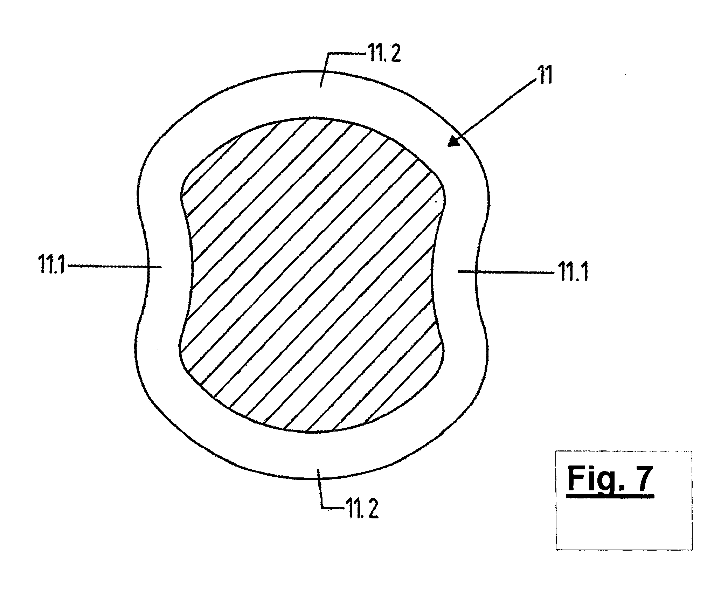

Die natürliche anatomische Struktur des Oberkiefer- oder Unterkieferknochens im Bereich eines Zahnes ist allerdings so, dass dieser im Zwischenzahnbereich grundsätzlich eine größere Höhe aufweist als im labialen und lingualen Bereich. Um unter Berücksichtigung der Gesetzmäßigkeit der "biologischen Breite" diesen Knochenverlauf aufrecht zu erhalten, ist die Vertiefung bzw. Ausnehmung 11 entsprechend der Figur 7 z.B. so ausgebildet, dass sie eine unterschiedliche Tiefe aufweist, d.h. an zwei um 180° um die Implantatlängsachse L versetzten Bereichen 11.1 ist die Vertiefung 11 tiefer ausgeführt als an zwei gegenüber diesen Bereichen 11.1 jeweils um 90° versetzten Bereichen 11.2. Das Implantat 1 wird dann so gesetzt, dass sich die Bereiche 11.1 im Zahnzwischenbereich befinden, so dass dort unter Berücksichtigung der sich aus dem Gesetz der "biologischen Breite" ergebenden Weglänge zwischen Sulcus und Übergang Bindegewebe/Knochen, die (Weglänge) die entlang des Implantats zum großen Teil von dem tieferen Abschnitt 11:1 bestimmt ist, das höhere Niveau für den Übergang Bindegewebe/Knochengewebe im Zahnzwischenbereich beibehalten wird.

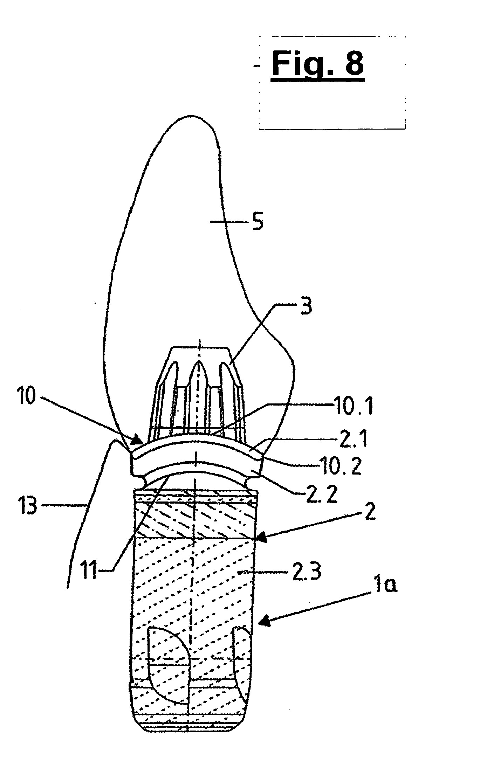

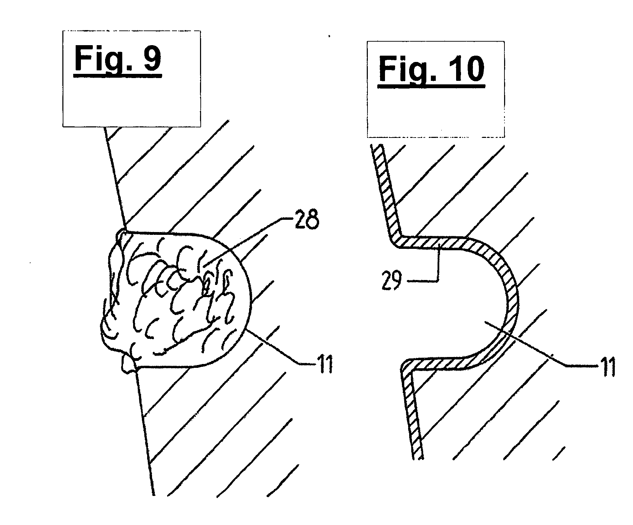

Die Figur 8 zeigt in einer Darstellung wie Figur 1 als weitere Ausführungsform ein Zahnimplantat 1a, welches sich vom Implantat 1 im Wesentlichen dadurch unterscheidet, dass der Zapfenabschnitt 2.1 an seiner dem Zapfen 3 zugewandten und die Ringfläche 10 bildenden Oberseite nicht plan ausgeführt ist, sondern girlandenförmig in der Weise, dass die Ringfläche 10 um die Implantatlängsachse L um 180° versetzt zwei erhabene Abschnitte 10.1 mit einem etwas größeren Abstand von dem in der Figur 9 unteren Ende des Implantats 1a und dazwischenliegend zwei vertiefte Abschnitte 10.2 mit einem kleineren Abstand von dem freien Ende bildet. Entsprechend ist dann auch das untere Ende des jeweiligen Aufbauteils, beispielsweise der Kappe 5 ausgeführt. Ferner folgt die Vertiefung 11 diesem Girlandenverlauf. Das Implantat 1a wird so gesetzt, dass die Abschnitt 10.1 sich im Zahnzwischenbereich befinden und hierdurch das höhere Niveau des Übergangs Bindegewebe/Knochengewebe erreicht bzw. beibehalten wird. Selbstverständlich kann die auch bei diesem Implantat vorgesehene Vertiefung 11 zusätzlich entsprechend der Figur 7 mit unterschiedlicher Tiefe ausgebildet sein.

Die Figuren 9 und 10 zeigen nochmals in vergrößerter Darstellung das Implantat 1 bzw. 1a im Bereich der Vertiefung 11. Wie dargestellt, kann in diese Vertiefung zum Verbessern des Ausheilens, Einwachsens usw. ein diesen Vorgang förderndes Material 28 eingebracht sein oder es ist dort eine Beschichtung 29 aus einem solchen Material aufgebracht sein, wobei dieses Material bzw. diese Beschichtung auch ein körpereigenes Gewebematerial sein kann.

Um die Einbindung des Implantats 1 bzw. 1a sowohl im Weichgewebe und Bindegewebe als auch im Knochengewebe als zu verbessern, sind die Pfostenabschnitte 2.1, 2.2 und 2.3 sowie auch die Vertiefung 11 an der Oberfläche in einer bestimmten Weise strukturiert, und zwar der Abschnitt 2.3 sowohl im Bereich der Gewindegänge als auch an den Vertiefungen zwischen den Gewindegängen. Die Strukturierung entspricht beispielsweise der Strukturierung, wie sie bei einem Pfirsichkern anzutreffen ist.

Im Einzelnen ist die Oberflächenstrukturierung beispielsweise so ausgeführt, dass sie im Bereich des Pfostenabschnittes 2.2 und im Bereich der Vertiefung 11 im Zahnzwischenbereich kleine, aber tiefe Poren aufweist und im labialen sowie lingualen Bereich tiefe, aber gröbere Strukturen besitzt.

Im Knochenbereich, d.h. im Abschnitt 2.3 ändert sich die Strukturierung ausgehend von der Vertiefung 11 zum freien Ende des Implantats, und zwar derart, dass in einem an die Vertiefung 11 anschließenden oberen Teilbereich die von den tiefen Poren gebildete Strukturierung einen in Richtung der Implantatlängsachse L orientierten Verlauf, in einem daran anschließenden Teil- oder Zwischenbereich die von den Poren gebildete Strukturierung eher großflächig mit nach unten hin zunehmender Porengröße in Richtung der Implantatlängsachse L sowie auch in einer Achsrichtung senkrecht hierzu ausgebildet oder orientiert ist, teilweise auch gekrümmt oder ausgebaucht, und im unteren Bereich, d.h. am unteren, freien Ende des Pfostenabschnitts 2.3 die von den Poren gebildete Strukturierung im Wesentlichen senkrecht zur Implantatlängsachse L orientiert ist.

Das jeweilige Aufbauteil bzw. die jeweilige Kappe 5 ist mit einer an die Querschnittsform des Zapfens 3 angepasste Ausnehmung 35 versehen, deren Umfangsfläche der Form des Zapfens 3 entsprechend eine Vielzahl von Vorsprüngen 36 und dazwischen liegenden Vertiefungen 37 aufweist, wobei die Vertiefungen 37 auf einer gemeinsamen, gedachten Mantellinie angeordnet sind, welche entsprechend der Formgebung der Zapfen 3 wiederum die drei Abschnitte mit den unterschiedlichen Winkeln α, β und γ bezogen auf die Achse der Ausnehmung 35 aufweisen. Jeder Vorsprung 36 ist bei auf den Zapfen 3 aufgesetztem Aufbauteil oder Kappe 5 von einen zwischen zwei Vorsprüngen 7 gebildeten Einkerbung des Zapfens 3 aufgenommen. Jeder Vorsprung 7 des Zapfens 3 greift passend in eine Vertiefung 37 ein.

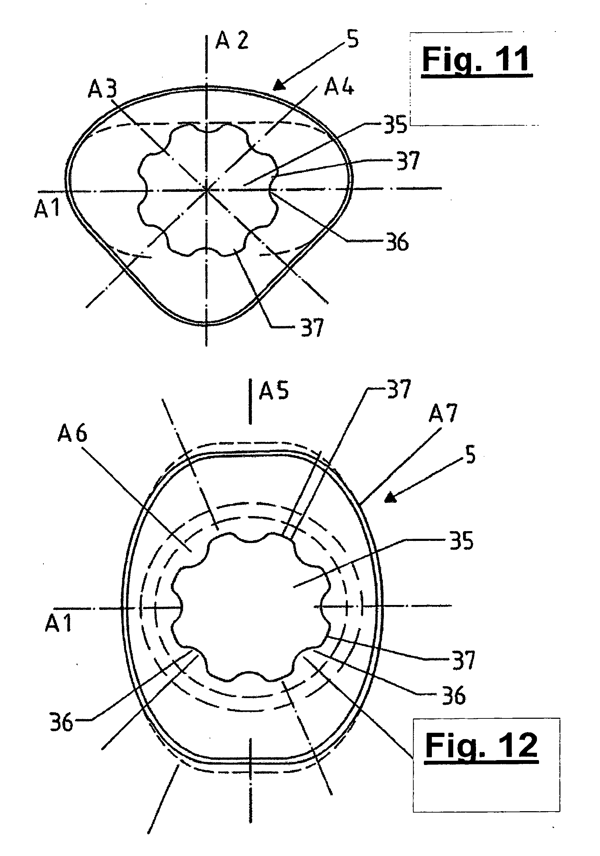

Um bei Belastung des jeweiligen am Zapfens 3 ausschließlich durch Verkleben befestigten Aufbauteils hinsichtlich der Kräfteverteilung optimale Verhältnisse zu erreichen, sind die Vorsprünge 36 jeweils zur Verstärkung der Dicke des Aufbauteils und damit zur Erhöhung der Belastbarkeit dort vorgesehen, wo auch bei einem natürlichen Zahn die Hauptbelastungen liegen. Dies ist bei allen Kappen 5 oder dergleichen Aufbauteilen oder Kronen zunächst die Achsrichtung, die durch die Verbindungslinie zwischen den beiden Seitenflächen oder Zahnzwischenflächen der Kappe 5 oder eines natürlichen Zahnes definiert ist. In dieser in den Figuren 11 - 13 jeweils mit A1 angegebenen Achsrichtung befindet sich auf jeden Fall beidseitig von der Achse der Ausnehmung 35 jeweils ein Vorsprung 36.

Bei dem in der Figur 11 im Schnitt dargestellten und einen Schneidezahn entsprechenden Aufbauteil 5 befinden sich zwei weitere Vorsprünge oder Ausbuchtungen 36 auf der Verbindungslinie A2 zwischen der Labialfläche und der Paratenalfläche des Aufbauteils 5. Weitere Vorsprünge 36 sind bei der Schnittdarstellung der Figur 14 zwischen den Achsrichtungen A1 und A2 in den Achsen A3 und A4 vorgesehen.

Die Figur 12 zeigt im Schnitt eine einem Prämolaren entsprechende Kappe 5. Die Ausnehmung 35 ist hier so ausgeführt, dass zwei weitere Vorsprünge 36 sich in einer Achsrichtung A5 gegenüberliegen, die durch die Verbindungslinie zwischen der gaumenseitigen und wangenseitigen Fläche des Aufbauteils 5 definiert ist. Weitere Vorsprünge 36 liegen sich bei der Schnittdarstellung der Figur 12 in Achsrichtungen A6 und A7 gegenüber, die zwischen den Achsrichtungen A1 und A5 verlaufen und mit diesen Achsrichtungen jeweils einen Winkel von 45° einschließen.

Die Figur 13 zeigt einen Schnitt durch eine als Molar ausgebildete Kappe 5. Hier sind die Vorsprünge 36 der Ausnehmung 35 in der gleichen Weise angeordnet, wie dies vorstehend im Zusammenhang mit der Figur 12 für die als Prämolar ausgebildete Kappe 5 bzw. das entsprechende Aufbauteil beschrieben wurde.

Weiterhin besteht die Möglichkeit, den Zapfen 3 und/oder die Aufbauteile bzw. Kappen 5 so auszubilden, dass die jeweilige Kappe beim Aufsetzen auf den Zapfen 3 an diesem durch Einrasten verriegelt wird. Hierdurch ist es möglich, die jeweilige Kappe während des Einheilprozesses zu fixieren und/oder die Kappe 5 oder ein anderes Aufbauteil zumindest bis zum Abbinden des Klebers in der vorgegebenen, exakten Position zu halten.

Weiterhin ist es möglich, die Innenfläche der Ausnehmung 35 zu strukturieren, d.h. mit einer Aufrauung, mit kleinen Einkerbungen usw. zu versehen, um die Klebeverbindung zu verbessern. Ferner ist es möglich, das jeweilige Aufbauteil bzw. die Kappe 5 insbesondere in solchen Bereichen, in denen bei Belastung erhöhte Beanspruchungen auftreten durch Fasern, beispielsweise auch durch Nanofasern zu verstärken.

Die Figuren 14 und 15 zeigen nochmals die als Prämolar bzw. Molar ausgebildete Kappe 5 in perspektivischer Darstellung. Die Kappen 5 sind bei dieser Ausführung an ihrer die Öffnung 35 für den jeweiligen Zapfen 3 aufweisenden Unterseite mit einem leicht überstehenden Kappenrand 5.1 versehen, der einen girlandenförmigen Verlauf in der Weise aufweist, dass der Abstand zwischen der Oberseite der Kappe und dem Rand 5.1 im Bereich der Achse A1, d.h. im Zwischenzahnbereich am kleinsten ist.

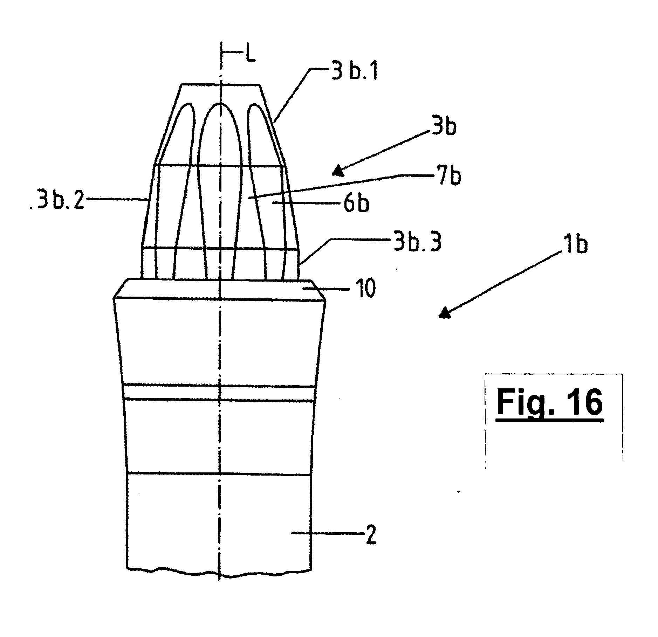

Die Figur 16 zeigt als weitere mögliche Ausführungsform ein Implantat 1b, welches sich von dem Implantat 1 durch die Strukturierung des Zapfens 3 unterscheidet. Der Zapfen 3 besitzt zwar auch bei dieser Ausführungsform wiederum den Vertiefungen 6 und den Vorsprüngen 7 entsprechende Vertiefungen 6b bzw. Vorsprünge 7b. Die Vertiefungen sind allerdings so geformt, dass sie ausgehend von der dem Pfosten 2 benachbarten Ringfläche einen zum freien Zapfenende hin eine zunächst zunehmende Breite und anschließend wieder eine abnehmende Breite aufweisen, wobei die maximale Breite der Vertiefungen 6b etwa dort liegt, wo der den Zapfenabschnitten 3.1 entsprechende Zapfenabschnitt 3b.1 in den den Zapfenabschnitt 3.2 entsprechenden Zapfenabschnitt 3.2 übergeht.

Den Vertiefungen 6b entsprechend weisen die Vorsprünge 7b eine sich ändernde Breite auf, und zwar in der Form, dass jeder Vorsprung 7b ausgehend von der Ringfläche 10 in Richtung zum freien Zapfenende zunächst eine sich verringernde Breite und anschließend wieder eine sich vergrößernde Breite aufweist.

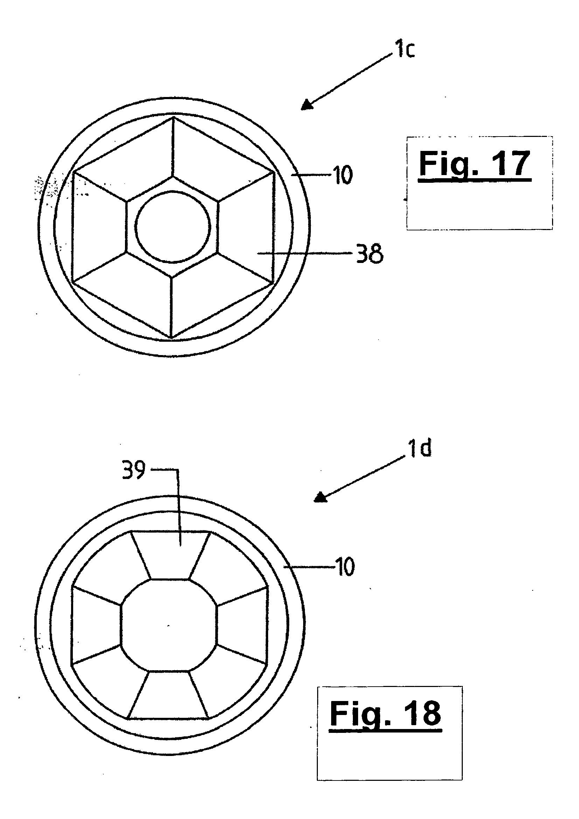

Vorstehend wurde davon ausgegangen, dass die Zapfen 3 bzw. 3b jeweils Vertiefungen 6, 6b und Vorsprünge 7, 7b aufweisen. Grundsätzlich besteht auch die Möglichkeit, die Zapfen des Implantats ohne derartige Vorsprünge auszubilden, und zwar mit den drei kegelstumpfförmigen bzw. zylindrischen Abschnitten 3.1, 3.2 und 3.3. Weiterhin besteht auch die Möglichkeit, Umfangs- oder Mantelflächen dieser Abschnitte in Form von polygonartig aneinander anschließenden ebenen Flächen auszubilden, wie dies in der Figur 17 für den Zapfen 38 dargestellt ist, oder aber in Kombination von ebenen Flächen und gekrümmten Kegelflächen, wie dies in der Figur 18 für den Zapfen 39 dargestellt ist.

Weiterhin besteht die Möglichkeit, den jeweiligen Zapfen so auszuführen, dass er oder zumindest ein Zapfenabschnitt mit der Längsachse des Implantats einen Winkel, beispielsweise den Winkel α einschließt, der sich entlang des Umfangs ändert.

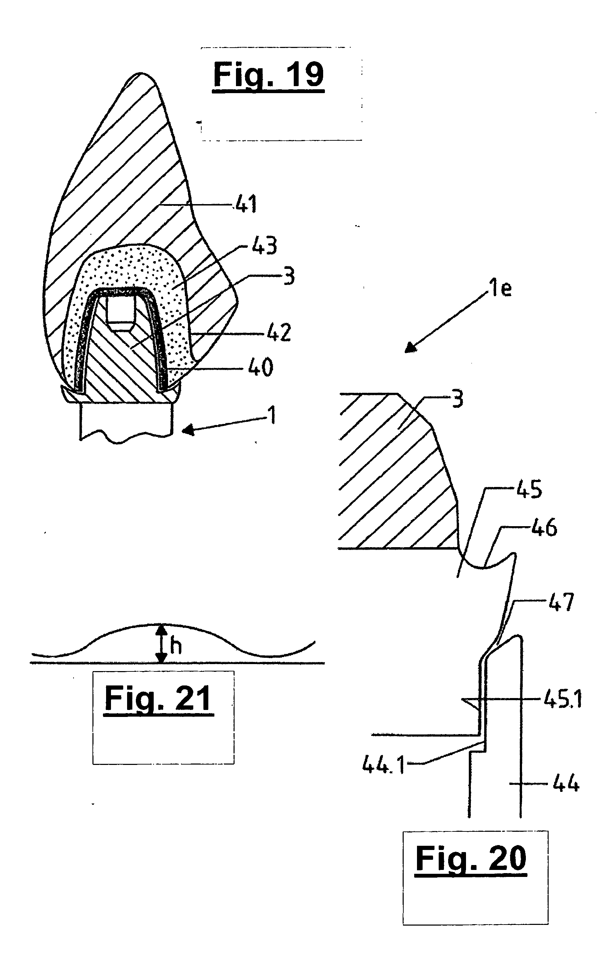

Die Figur 19 zeigt nochmals den Zapfen 3, zusammen mit einer auf diesen Zapfen aufgesetzten Hülle 40 geringer Schichtdicke, beispielsweise mit einer Schichtdicke im Bereich zwischen 0,05 und 1,0 mm. Die Hülle 40 bildet die Kontur des Zapfens 3 exakt nach. Mit 41 ist ein natürlicher Zahn bezeichnet, der an der Unterseite bei 42 aufgebohrt ist. Der Zahn 41 wird bei dieser Ausführungsform als Kappe verwendet. Hierfür wird die Hülle 40 in die Bohrung 42 eingesetzt und dort mit einem geeigneten Füllmaterial 43 verankert, so dass der natürliche Zahn 41 dann als Aufbauteil auf dem Implantat bzw. auf dem Zapfen 3 verankert werden kann.

Die Figur 20 zeigt in Teildarstellung ein zweiteiliges Implantat, welches aus dem den Pfosten bildenden Teil 44 und aus dem den Zapfen 3 bildenden Teil 45 besteht. Anstelle der Ringfläche 10 weist dieses Implantat bzw. dessen Teil 45 eine umlaufende Hohlrinne 46, die wiederum den gialandenförmigen Verlauf aufweist. Diese Hohlrinne dient u.a. zum Auffangen von Zement beim Verbinden von Implantat und Aufbauteil. Am oberen Rand des Teiles 44 ist zwischen den beiden Teilen ein Spalt 47 gebildet, der als "switched platform" wirkt, und zwar in gleicher Weise, wie dies für die Vertiefung 11 beschrieben wurde. Auch dieser Spalt 47 bzw. diese switched platform 47 besitzt den girlandenförmigen Verlauf.

Die beiden Teile 44 und 45 sind so ausgebildet, dass bei in das Teil 44 bzw. in eine dortige Ausnehmung 44.1 mit dem Abschnitt 45.1 eingesetzten Teil 45 eine drehfeste Verbindung zwischen den beiden Teilen besteht. Hierfür weist die Ausnehmung im Teil 44 einen von der Kreisform abweichenden Querschnitt, beispielsweise einen Sechkant-Querschnitt auf. Der Abschnitt 45.1 ist mit einem entsprechenden Außenquerschnitt versehen. Die Ausnehmung 44.1 dient bei Setzen des Implantats bzw. des Teils 44 auch als Werkzeugangriffsfläche.

Die Figur 21 zeigt nochmals schematisch den girlandenförmigen Verlauf sowohl der Hohlrinne 46 als auch des Spaltes 47 bzw. der "switched platform". Die Höhe h zwischen den unteren und den oberen Maximum des girlandenförmigen Verlaufs liegt bei einem Implantat für einen Front- oder Schneidezahn im Bereich zwischen 1,2 und 2,5 mm, bei einem Implantat für einen Prämolaren im Bereich zwischen 0,9 und 1,5 mm und bei einem Implantat für einen Molaren im Bereich zwischen 0,5 und 0,9 mm, und zwar jeweils abhängig vom Verlauf der "switched platform" um die Längsachse des Implantats. Verläuft die "switched platform" entsprechend der in der Figur 7 angegebenen Form um die Längsachse des Implantats mit konkaven Abschnitte 11.1, so gilt jeweils der kleinere Wert. Verläuft die switched platform hingegen entsprechend der Figur 7 auch an den Abschnitten 11.1 konvex, so gelten jeweils die höheren Werte für h.

### Bezugszeichenliste

- 1, 1a: Zahnimplantat
- 2: Pfosten
- 2.1, 2.2, 2.3: Pfostenabschnitt
- 3: Zapfen
- 3.1, 3.2, 3.3: Zapfenabschnitt
- 5: Aufbauteil bzw. Kappe
- 6: Vertiefung
- 7: Vorsprung
- 8: Stirnfläche
- 9: Gewindebohrung
- 10: Ringfläche
- 10.1, 10.2: Abschnitte der Ringfläche 10
- 11: Vertiefung
- 11.1, 11.2: Abschnitte der Vertiefung
- 13: Weichgewebe
- 14: Sulcus
- 15: Epitel-Attachment
- 16: Bindegewebe-Attachment
- 17: Knochen
- 18, 18a: Adapter
- 18.1, 18.2: Abschnitt des Adapters 18
- 18.3: nutenartige Vertiefung
- 19: Bohrung
- 20: Schraube
- 28: den Einheilprozess förderndes Material
- 29: Beschichtung
- 35: Ausnehmung
- 36: Vorsprung
- 37: Vertiefung
- 38, 39: Zapfen
- A1 - A7: Achsrichtung
- α, β, γ: Winkel
- L: Implantatlängsachse

## Patentansprüche

1. Zahnimplantat mit einem Implantatkörper, der vorzugsweise einstückig mit einem eine Verankerung im Knochengewebe bewirkenden Pfosten (2) sowie mit einem Zapfen (3) an einem Ende des Implantatkörpers zum Befestigen eines Aufbauteils gefertigt ist, wobei
der Zapfen (3) hinsichtlich der Formgebung seiner Außenfläche wenigstens drei Abschnitte bildet, die in Zapfenlängsrichtung (L) aneinander anschließen, und von denen ein erster, dem freien Ende des Zapfens (3) näher liegender Abschnitt (3.1) mit seiner Umfangsfläche einen ersten Winkel (α) mit der Zapfenlängsachse (L), ein auf den ersten Abschnitt (3.1) in Richtung zum Pfosten (2) folgender zweiter Abschnitt (3.2) mit seiner Umfangsfläche einen zweiten Winkel (β) mit der Zapfenlängsachse (L) und ein auf den zweiten Abschnitt (3.2) in Richtung zum Pfosten (2) folgender dritter Abschnitt (3.3) mit seiner Umfangsfläche einen dritten Winkel (γ) mit der Zapfenlängsrichtung (L) einschließt **dadurch gekennzeichnet, dass** der dritte Winkel kleiner ist als der zweite Winkel und der zweite Winkel kleiner ist als der erste Winkel,.

2. Zahnimplantat nach Anspruch 1, **dadurch gekennzeichnet, dass** der Zapfen (3) mit mehreren am Zapfenumfang verteilten und mit ihrer Längserstreckung jeweils in Zapfenlängsrichtung (L) orientierten nutenartigen Vertiefungen (6) und dazwischen liegenden Vorsprüngen (7) ausgebildet ist, und dass sich die nutenförmigen Vertiefungen (6) im zweiten und dritten Abschnitt (3.2, 3.3) des Zapfens (3) erstrecken.

3. Zahnimplantat nach Anspruch 1 oder 2, **dadurch gekennzeichnet, dass** der Pfosten (2) zwischen einem in einer Implantatlängsachse (L) auf den Zapfen (3) folgenden und für die Einbindung im Weichgewebe bestimmten Abschnitt (2.2) und einem im Knochengewebe zu verankernden Pfostenabschnitt (2.3) wenigstens eine die Implantatlängsachse (L) zumindest teilweise umschließende Vertiefung (11) aufweist, und zwar zur Vergrößerung des biologischen Abstandes zwischen dem Übergang Aufbauteil/Implantat und dem Knochengewebe.

4. Zahnimplantat nach einem der Ansprüche 1 - 3, **dadurch gekennzeichnet, dass** der erste Winkel (α) im Bereich zwischen 12 - 85°, der zweite Winkel (β) im Bereich zwischen 4 und 12° und der dritte Winkel (γ) im Bereich zwischen 0 und 3° gewählt sind.

5. Zahnimplantat nach einem der Ansprüche 1 - 4, **dadurch gekennzeichnet, dass** der erste Winkel (α) 21°, der zweite Winkel (β) 6° und der dritte Winkel (γ) 0° betragen.

6. Zahnimplantat nach einem der Ansprüche 1 - 5, **dadurch gekennzeichnet, dass** zumindest der erste und zweite Abschnitte (3.1, 3.2) kegelstumpfförmig ausgebildet sind.

7. Zahnimplantat nach Anspruch 6, **dadurch gekennzeichnet,**
**dass** der Zapfen (3) ausgehend von einem dem Pfosten (2) entfernt liegenden Zapfenende (8) einen ersten kegelstumpfförmigen Abschnitt (3.1) mit größerem Kegelwinkel und daran anschließend einen zweiten kegelstumpfförmigen Abschnitt (2.3) mit kleinerem Kegelwinkel und daran anschließend einen Abschnitt (3.3) mit einer kreiszylinderförmigen Umfangsfläche bzw. Umfangskontur aufweist.

8. Zahnimplantat nach einem der Ansprüche 1 - 7, **dadurch gekennzeichnet, dass** der Zapfen (3) eine plane oder im Wesentlichen plane Stirnfläche (8) besitzt und/oder an seinem freien Ende mit einer Gewindebohrung (9) versehen ist,
und/oder
dass der Zapfen (3) an seinem Umfang verteilt acht nutenartige Vertiefungen (6) aufweist.

9. Zahnimplantat nach einem der Ansprüche 3 - 8, **dadurch gekennzeichnet,**
**dass** die den biologischen Abstand vergrößernde Vertiefung (11, 11a) als die Implantatlängsachse (L) umschließende ringförmige Nut ausgebildet ist und/oder an zwei um 180° um die Implantatlängsachse (L) versetzten Bereichen eine größere Tiefe aufweist und/oder einen girlandenförmigen Verlauf aufweist.

10. Zahnimplantat nach einem der Ansprüche 1 - 9, **gekennzeichnet durch** eine den Zapfen (3) am Übergang zum Pfosten (2) umschließende und einen Absatz oder eine Stufe bildenden Ringfläche (10, 10a), die beispielsweise in einer Ebene senkrecht zur Implantatlängsachse (L) angeordnet ist und/oder einen girlandenförmigen Verlauf aufweist.

11. Zahnimplantat nach einem der Ansprüche 1 - 10, **gekennzeichnet durch** ein in seiner Formgebung der Form eines natürlichen Zahns entsprechendes Aufbauteil (5) mit einer an der Form und Größe des Zapfens (3) angepassten Ausnehmung (35) zur passenden Aufnahme dieses Zapfens (3), wobei die Ausnehmung (35) um ihre Achse verteilt an ihrer Innenfläche Vorsprünge (36) und dazwischen liegende Vertiefungen (37) aufweist, und dass wenigstens zwei Vorsprünge (36) beidseitig von einer Mittelachse der Ausnehmung (35) sich in einer Achsrichtung (A1) gegenüberliegen, die **durch** die Verbindungslinie zwischen den Seitenflächen oder Zwischenzahnbereichen des Aufbauteils (5) definiert ist.

12. Zahnimplantat nach Anspruch 11, **dadurch gekennzeichnet,**
**dass** bei Ausbildung des Aufbauteils (5) als Front- oder Schneidezahn wenigstens zwei weitere Vorsprünge (36) sich an der Mittelachse der Ausnehmung (35) in einer zweiten Achsrichtung (A2) gegenüberliegen, die durch die Verbindungslinien zwischen der Lippenseite und der Gaumenseite des Aufbauteils definiert ist.

13. Zahnimplantat nach Anspruch 11, **dadurch gekennzeichnet, dass** bei Ausbildung des Aufbauteils (5) als Prämolar oder Molar sich wenigstens zwei weitere Vorsprünge (36) an der Mittelachse der Ausnehmung (35) in einer dritten Achsrichtung (A5) gegenüberliegen, die durch die Verbindungslinie der gaumenseitigen Fläche und der wangenseitigen Fläche des Aufbauteils (5) definiert ist.

14. Zahnimplantat nach Anspruch 12 oder 13, **dadurch gekennzeichnet, dass** zwischen den ersten und zweiten Vorsprüngen (36) weitere Vorsprünge (36) vorgesehen sind und/oder
dass jeder Vorsprung (36) der Ausnehmung (35) in eine Ausnehmung (6) des Zapfens und in jede Vertiefung (37) der Ausnehmung (35) ein Vorsprung (7) des Zapfens (3) passend eingreift.

## Claims

1. A dental implant having an implant body, which is preferably manufactured in a single piece comprising a support (2), which acts as an anchor in the bone tissue, and a journal (3) on one end of the implant body for fastening a superstructure, wherein with regard to the shaping of its exterior surface, the journal (3) provides at least three sections which are connected to one another in the longitudinal direction (L) of the journal, and of which a first section (3.1) being more proximal to the free end of the journal (3) forms with its circumferential surface a first angle (α) with the longitudinal axis (L) of the journal, a second section (3.2) following the first section (3.1) in the direction of the support (2) forms with its circumferential surface a second angle (β) with the longitudinal axis (L) of the journal, and a third section (3.3) following the second section (3.2) in the direction of the support (2) forms with its circumferential surface a third angle (γ) with the longitudinal direction (L) of the journal, **characterized in that** the third angle is smaller than the second angle, and the second angle is smaller than the first angle.

2. Dental implant according to claim 1, **characterized in that** the journal (3) is designed with a plurality of groove-type recesses (6) distributed over the circumference of the journal, their longitudinal extent being oriented in the longitudinal direction (L) of the journal with protrusions (7) arranged in between them, and that the groove-type recesses (6) extend in the second and third sections (3.2, 3.3) of the journal (3).

3. Dental implant according to claim 1 or 2, **characterized in that** the support (2) comprises at least one recess (11) being located between a section (2.2) following the journal (3) in the longitudinal axis (L) of the implant and being intended for embedding in the soft tissue, and a support section (2.3) to be anchored in the bone tissue, the recess surrounding at least partially the longitudinal axis (L) of the implant, namely for the purpose of increasing the biological distance between the bone tissue and the transition between the superstructure and the implant.

4. Dental implant according to any one of claims 1-3, **characterized in that** the first angle (α) is selected to be in the range between 12° and 85°, the second angle (β) is selected to be in the range between 4° and 12° and the third angle (γ) is selected to be in the range between 0° and 3°.

5. Dental implant according to any one of claims 1-4, **characterized in that** the first angle (α) is 21°, the second angle (β) is 6° and the third angle (γ) is 0°.

6. Dental implant according to any one of claims 1-5, **characterized in that** at least the first and second sections (3.1, 3.2) are designed in the form of truncated cones.

7. Dental implant according to claim 6, **characterized in that** the journal (3) has a first section (3.1) in the form of a truncated cone with a larger cone angle starting from the end (8) of the journal distant from the support (2) and, connected thereto, has a second section (2.3) in the form of a truncated cone with a smaller cone angle and, connected thereto, a section (3.3) with a circular cylindrical circumferential surface and/or a circumferential contour.

8. Dental implant according to any one of claims 1-7, **characterized in that** the journal (3) has a planar or essentially planar end face (8) and/or is provided on its free end with a threaded bore (9), and/or the journal (3) has eight groove-type recesses (6) distributed on its circumference.

9. Dental implant according to any one of claims 3-8, **characterized in that** the recess (11, 11a) increasing the biological distance, is designed as an annular groove surrounding the longitudinal axis (L) of the implant and/or has a greater depth in two regions, which are offset by 180° around the longitudinal axis (L) of the implant, and/or has a garland-shaped course.

10. Dental implant according to any one of claims 1-9, **characterized by** an annular face (10, 10a) forming a shoulder or a step, surrounding the journal (3) at the transition to the support (2), and which for example is arranged in a plane perpendicular to the longitudinal axis (L) of the implant and/or has a garland-shaped course.

11. Dental implant according to any one of claims 1-10, **characterized by** a superstructure (5) which corresponds in its shape to the shape of a natural tooth and has a recess (35) that is adapted to the shape and size of the journal (3) for fitting accommodation of this journal (3), wherein the recess (35) has protrusions (36) on its inside surface distributed around its axis and has indentations (37) in between, and that at least two protrusions (36) are opposite one another in an axial direction (A1) on both sides of a central axis of the recess (35), this axial direction being defined by the connecting line between the side surfaces or interdental regions of the superstructure (5).

12. Dental implant according to claim 11, **characterized in that** when the superstructure (5) is designed as a front tooth or an incisor, at least two additional protrusions (36) are opposite one another on the central axis of the recess (35) in a second axial direction (A2), which is defined by the connecting lines between the lip side and the palatine side of the superstructure.

13. Dental implant according to claim 11, **characterized in that** when the superstructure (5) is designed as a premolar or molar, at least two additional protrusions (36) on the central axis of the recess (35) are opposite one another in a third axial direction (A5), which is defined by the connecting line of the surface of the superstructure (5) on the palatine side and that on the cheek side.

14. Dental implant according to claim 12 or 13, **characterized in that** additional protrusions (36) are provided between the first and second protrusions (36) and/or each protrusion (36) of the recess (35) fittingly engages in a recess (6) of the journal, and a protrusion (7) of the journal (3) fittingly engages in each indentation (37) of the recess (35).

## Revendications

1. Implant dentaire, comprenant un corps d'implant fabriqué de préférence d'un seul tenant avec une embase (2) provoquant un ancrage dans le tissu osseux, ainsi qu'un pivot (3) à une extrémité du corps d'implant pour fixer une superstructure, dans lequel le pivot (3), en vue du façonnage de sa surface extérieure, forme au moins trois sections contiguës dans la direction longitudinale (L) du pivot et dont une première section (3.1) située plus proche de l'extrémité libre du pivot (3) définit par sa surface circonférentielle un premier angle (α) avec l'axe longitudinal (L) du pivot, une deuxième section (3.2) consécutive à la première section (3.1) en direction de l'embase (2) définit par sa surface circonférentielle un deuxième angle (β) avec l'axe longitudinal (L) du pivot, et une troisième section (3.3) consécutive à la deuxième section (3.2) en direction de l'embase (2) forme par sa surface circonférentielle un troisième angle (γ) avec la direction longitudinale (L) du pivot, **caractérisé en ce que** le troisième angle est inférieur au deuxième angle et que le deuxième angle est inférieur au premier angle.

2. Implant dentaire selon la revendication 1, **caractérisé en ce que** le pivot (3) est réalisé avec plusieurs creux (6) de type rainure, réparties sur la circonférence du pivot et orientés par leur étendue longitudinale respectivement dans la direction longitudinale (L) du pivot, et avec des saillies (7) situées entre ceux-ci, et **en ce que** les creux (6) en forme de rainure s'étendent en la deuxième et la troisième section (3.2, 3.3) du pivot (3).

3. Implant dentaire selon la revendication 1 ou 2, **caractérisé en ce que** l'embase (2) présente entre une section (2.2) consécutive au pivot (3) sur un axe longitudinal (L) de l'implant et destinée à l'incorporation dans le tissu mou, et une section d'embase (2.3) à ancrer dans le tissu osseux, au moins un creux (11) entourant au moins partiellement l'axe longitudinal (L) de l'implant, notamment pour augmenter la distance biologique entre la transition superstructure/implant et le tissu osseux.

4. Implant dentaire selon l'une quelconque des revendications 1 à 3, **caractérisé en ce que** le premier angle (α) est sélectionné dans la plage comprise entre 12 et 85°, le deuxième angle (β) est sélectionné dans la plage comprise entre 4 et 12°, et le troisième angle (γ) est sélectionné dans la plage comprise entre 0 et 3°.

5. Implant dentaire selon l'une quelconque des revendications 1 à 4, **caractérisé en ce que** le premier angle (α) est égal à 21 °, le deuxième angle (β) est égal à 6° et le troisième angle (γ) est égal à 0°.

6. Implant dentaire selon l'une quelconque des revendications 1 à 5, **caractérisé en ce qu'**au moins les première et deuxième sections (3.1, 3.2) sont réalisées de forme tronconique.

7. Implant dentaire selon la revendication 6, **caractérisé en ce que** le pivot (3) présente, en partant d'une extrémité de pivot (8) éloignée de l'embase (2), une première section tronconique (3.1) d'un angle de cône supérieur, et consécutive à celle-ci, une deuxième section tronconique (2.3) d'un angle de cône inférieur, et consécutive à celle-ci une section (3.3) de surface circonférentielle ou contour circonférentiel cylindrique.

8. Implant dentaire selon l'une quelconque des revendications 1 à 7, **caractérisé en ce que** le pivot (3) possède une face (8) plane ou substantiellement plane et/ou qu'est muni à son extrémité libre d'un taraudage (9), et/ou **en ce que** le pivot (3) présente huit creux (6) de type rainure répartis sur sa circonférence.

9. Implant dentaire selon l'une quelconque des revendications 3 à 8, **caractérisé en ce que** le creux (11, 11a) augmentant la distance biologique est réalisé sous forme de rainure annulaire entourant l'axe longitudinal (L) de l'implant et/ou présente au niveau de deux zones décalées de 180° autour de l'axe longitudinal (L) de l'implant une plus grande profondeur et/ou un tracé en guirlande.

10. Implant dentaire selon l'une quelconque des revendications 1 à 9, **caractérisé par** une surface annulaire (10, 10a) entourant le pivot (3) au niveau de la transition vers l'embase (2) et formant un épaulement ou un gradin, ladite surface étant disposée par exemple dans un plan perpendiculaire à l'axe longitudinal (L) de l'implant et/ou présentant un tracé en guirlande.

11. Implant dentaire selon l'une quelconque des revendications 1 à 10, **caractérisé par** une superstructure (5) correspondant par son façonnage à la forme d'une dent naturelle et comprenant un évidement (35) adapté à la forme et la dimension du pivot (3) pour recevoir ledit pivot (3) de manière adaptée, dans lequel l'évidement (35) présente des saillies (36) sur sa surface intérieure réparties autour de son axe et des creux (37) situés entre celles-ci, et en ce qu'au moins deux saillies (36) sont opposées des deux côtés d'un axe central du creux (35) dans une direction axiale (A1) définie par la ligne de jonction entre les surfaces latérales ou les zones dentaires intermédiaires de la superstructure (5).

12. Implant dentaire selon la revendication 11, **caractérisé en ce que** lors de la réalisation de la superstructure (5) sous la forme d'une dent antérieure ou incisive, au moins deux autres saillies (36) sont opposées le long de l'axe central du creux (35) dans une deuxième direction axiale (A2) qui est définie par les lignes de jonction entre le côté labial et le côté palatal de la superstructure.

13. Implant dentaire selon la revendication 11, **caractérisé en ce que** lors de la réalisation de la superstructure (5) sous forme de prémolaire ou de molaire, au moins deux autres saillies (36) sont opposées le long de l'axe central du creux (35) dans une troisième direction axiale (A5) qui est définie par la ligne de jonction de la surface côté palais et la surface côté joue de la superstructure (5).

14. Implant dentaire selon la revendication 12 ou 13, **caractérisé en ce que** d'autres saillies (36) sont prévues entre les premières et deuxièmes saillies (36), et/ou **en ce que** chaque saillie (36) de l'évidement (35) s'engage de manière adaptée dans un évidement (6) du pivot et une saillie (7) du pivot (3) s'engage dans chaque creux (37) de l'évidement (35).
